# EUROPEAN PATENT APPLICATION

(11) **EP 2 375 618 A1**
(43) Date of publication of application: **12.10.2011**
(21) Application number: 11002991.5
(22) Date of filing: 08.04.2011
(51) Int. Cl.: H04L 5/00, H04W 72/04, H04W 4/06

(54) **Method for managing sounding reference signal transmission**

(30) Priority: 08.04.2010 US 322079 P
(71) Applicant: HTC Corporation, Taoyuan County 330 (TW)
(72) Inventor: Jen, Yu-Chih, Taoyuan City Taoyuan County 330 (TW)
(74) Representative: Wagner, Karl H.

(57) **Abstract**

A method of handling a sounding reference signal (SRS) and a physical uplink control channel (PUCCH) for a mobile device in a wireless communication system is disclosed. The method comprises enabling a mobile device-specific carrier aggregation with at least one component carrier, transmitting the SRS on a first component carrier of the at least one component carrier in a first subframe to a network of the wireless communication system, and transmitting the PUCCH on a second component carrier of the at least one component carrier in the first subframe to the network of the wireless communication system.

## Description

### Cross Reference To Related Applications

This application claims the benefit of U.S. Provisional Application No. 61/322,079, filed on April 8, 2010 and entitled "Method and apparatus for sounding reference signal enhancement", the contents of which are incorporated herein in their entirety.

### Background of the Invention

### 1. Field of the Invention

The present invention relates to a method used in a wireless communication system and related communication device, and more particularly, to a method of handling a sounding reference signal and a physical uplink control channel in a wireless communication system and related communication device.

### 2. Description of the Prior Art

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, a radio access network known as an evolved universal terrestrial radio access network (E-UTRAN) includes a plurality of evolved Node-Bs (eNBs) for communicating with a plurality of user equipments (UEs) and communicates with a core network including a mobility management entity (MME), serving gateway, etc for NAS (Non Access Stratum) control.

A sounding reference signal (SRS) is transmitted by the UE and received by the eNB in the LTE system. The main purpose of the SRS is used for a channel quality estimation so as to perform a frequency-selective scheduling among UEs on an uplink (UL). Therefore, a frequency band on which the UE transmits the SRS can be wider than those for transmitting data and control signals. Frequency bands for transmitting SRSs of the UEs shall be allowed to be overlapped such that the eNB can perform the frequency-selective scheduling among the UEs over the overlapped frequency bands. Moreover, the SRS can also be used for enhancing power control, modulation and coding scheme (MCS) selection, positioning and timing advance, obtaining an angle required for beamforming and performing an initial acquisition, especially when the UE is not scheduled for a period of time. In the LTE system, an SRS transmission can be periodic or aperiodic. In the periodic case, the eNB configures the UE to transmit the SRS periodically until the UE powers off or is reconfigured. In the aperiodic case, the UE transmits the SRS only when the eNB requests the SRS transmission from the UE. Besides, a power for the SRS transmission is usually limited to a certain value to avoid a nonlinear distortion of an amplifier in the UE when the UE boosts the power at a coverage edge of the eNB.

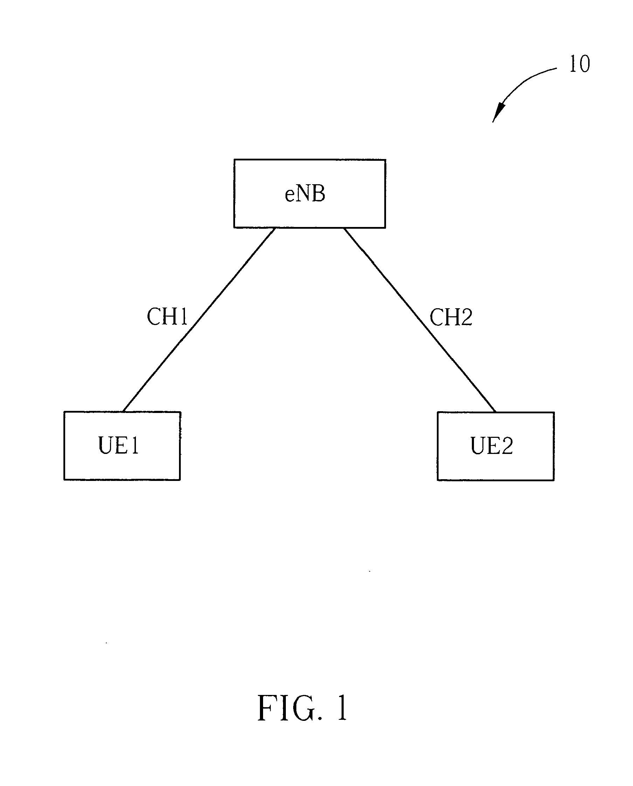

Please refer to Fig. 1, which is a schematic diagram of an examplary wireless communication system according to the prior art. UE1 and UE2 both transmit SRSs on a frequency band, which may comprises multiple resoruce blocks or subcarriers. Since locations and behaviors of the UE1 and the UE2 may not be the same, channels CH1 and CH2 experienced by the SRSs of the UE1 and UE2, respectively, are also different. The eNB estimates the received SRSs from the UE1 and the UE2, and obtain channel qualities of the channels CH1 and CH2. If the channel quality of the channel CH1 is better than the one of the channel CH2, the eNB configures more or all resources of the frequency band to the UE1. In constrast, if the channel quality of the channel CH2 is better than the one of the channel CH1, the eNB configures more or all resources of the frequency band to the UE2. Since the UE with a better channel quality is capable of using a higher level modulation and a lower rate coding, the system capacity is increased in terms of more data being transmitted and received. In short, the eNB configures more or all resoruces on the frequency band to the UE with a better channel quality. The capacity gain becomes larger when the frequency bands of more UEs corresponding to different channel qualities are scheduled by the eNB.

Please note that, SRSs are transmitted in a same frequency band in which an orthogonality and a low interference is achieved among the SRSs. Accordingly, the eNB performs the channel quality estimation with each of the received SRSs. In the LTE system, the orthogonality is achieved among the received SRSs by using an interleaved frequency-division multiple access (IFDMA), limiting the sounding bandwidth used by the UE, and transmitting the SRS with a specially designed sequence (e.g. a Zadoff-Chu sequence) corresponding to a cyclic time shift and a base sequence. The low interference is achieved by using an interference randomization where a sequence-group hopping among base sequences and a cyclic shift hopping are used.

An UL control signaling is not transmitted along with the data in the LTE system, i.e., the UL control signaling is transmitted by the UE using a dedicated resource. The UL control signaling in the LTE system includes an acknowledgement/negative acknowledgement (ACK/NACK) for downlink (DL) data, a channel quality indicator (CQI), a scheduling request (SR) and multiple-input multiple-output (MIMO) parameters of the UE. The UE transmits the UL control signaling to the eNB on a physical uplink control channel (PUCCH) in the LTE system. Resource blocks allocated to the PUCCH in a subframe, i.e., a PUCCH region, locate on edges of a system bandwidth for a low out of band (OOB) emission and a low constraint on the UL data scheduling. Besides, the resource blocks hops within slots (intra-subframe hopping) or between slots (inter-subframe hopping) for gaining a frequency diversity. Moreover, UL control signalings of a plurality of UEs can be multiplexed in the PUCCH region by using a base sequence with different cyclic time shifts in a frequency domain, and different orthogonal block spreading codes in a time domain, so as to exploit the PUCCH region efficiently. On the other hand, the SRS and the PUCCH cannot be transmitted in the same subframe in the LTE system. If the SRS and the PUCCH are scheduled to be transmitted in the same subframe, the UE drops the SRS or shortens the PUCCH before the transmission.

A long term evolution-advanced (LTE-A) system, as its name implies, is an evolution of the LTE system. The LTE-A system targets faster switching between power states, improves performance at the coverage edge of the eNB, and includes subjects, such as bandwidth extension, coordinated multipoint transmission/reception (CoMP), UL multiple-input multiple-output (MIMO), etc.

For bandwidth extension, a carrier aggregation (CA) is introduced to the LTE-A system by which two or more component carriers are aggregated to achieve a wider-band transmission. Accordingly, the LTE-A system can support a wider bandwidth up to 100MHz by aggregating a maximum number of 5 component carriers, where bandwidth of each component carrier is 20MHz and is backward compatible with 3GPP Rel-8. An LTE-A specification supports CA for both continuous and non-continuous component carriers with each component carrier limited to a maximum of 110 resource blocks. The CA increases a bandwidth flexibility by aggregating the non-continuous component carriers. A component carrier is either used as an UL component carrier or a downlink (DL) component carrier, but not both. Further, there is a one-to-one correspondence between the UL component carrier and the DL component carrier, i.e., each UL component carrier is paired with a corresponding DL component carrier.

When the UE is configured with the CA, the UE is allowed to receive and transmit data on one or multiple component carriers to increase the data rate. In the LTE-A system, it is possible for the eNB to configure the UE different numbers of UL and DL component carriers which depend on UL and DL aggregation capabilities, respectively. Moreover, the component carriers configured to the UE necessarily consists of one DL primary component carrier (PCC) and one UL primary component carrier. Component carriers other than the primary component carriers are named UL or DL secondary component carriers (SCCs). The numbers of UL and DL secondary component carriers are arbitrary, and are related to the UE capability and available radio resource. The UL and DL primary component carriers are used for establishing and re-establishing the radio resource control (RRC), and transmitting and receiving the system information. The UL or DL primary component carrier can not be de-activated, but can be changed by a handover procedure with the RACH procedure.

Since the method for handling the SRS and the PUCCH in the LTE system is designed for the UE and the network with only a single component carrier, the method cannot be directly applied to the LTE-A system with the component carriers. In detail, if the UE transmits the SRS on the component carriers, there is a greater flexibility for the eNB to perform the frequency-selective scheduling, i.e., performing the frequency-selective scheduling among the component carriers. Therefore, since the UE is configured with the component carriers, how to transmit the SRS and the PUCCH in the same subframe is a topic for discussion. Accordingly, parameters and protocols as well as respective signaling related to the transmission of the SRS and the PUCCH in the LTE system must be extended or modified for the LTE-A system.

### Summary of the Invention

The disclosure therefore provides a method and related communication device for handling a sounding reference signal (SRS) and a physical uplink control channel (PUCCH) to solve the abovementioned problems.

A method of handling a sounding reference signal (SRS) and a physical uplink control channel (PUCCH) for a mobile device in a wireless communication system is disclosed. The method comprises enabling a mobile device-specific carrier aggregation with at least one component carrier, transmitting the SRS on a first component carrier of the at least one component carrier in a first subframe to a network of the wireless communication system, and transmitting the PUCCH on a second component carrier of the at least one component carrier in the first subframe to the network of the wireless communication system.

A method of handling a sounding reference signal (SRS) and a physical uplink control channel (PUCCH) for a mobile device in a wireless communication system is disclosed. The method comprises enabling a mobile device-specific carrier aggregation with at least one component carrier, transmitting the SRS on both a first component carrier and a second component carrier of the at least one component carrier in a first subframe to a network of the wireless communication system, and transmitting the PUCCH on the second component carrier of the at least one component carrier in the first subframe to the network of the wireless communication system.

A method of handling a sounding reference signal (SRS) and a physical uplink control channel (PUCCH) for a mobile device in a wireless communication system is disclosed. The method comprises enabling a mobile device-specific carrier aggregation with at least one component carrier, transmitting the SRS according to an SRS configuration on both a first component carrier and a second component carrier of the at least one component carrier in a first subframe or a single carrier-frequency division multiple access (SC-FDMA) symbol of the first subframe to a network of the wireless communication system, and shortening the PUCCH SC-FDMA symbols comprising at least one acknowledgement result when the PUCCH is transmitted on the second component carrier of the at least one component carrier in the first subframe to the network of the wireless communication system.

A communication device of a wireless communication system for handling a sounding reference signal (SRS) and a physical uplink control channel (PUCCH) is disclosed. The communication device comprises means for enabling a mobile device-specific carrier aggregation with at least one component carrier, means for transmitting the SRS on a first component carrier of the at least one component carrier in a first subframe to a network of the wireless communication system, and means for transmitting the PUCCH on a second component carrier of the at least one component carrier in the first subframe to the network of the wireless communication system.

A communication device of a wireless communication system for handling a sounding reference signal (SRS) and a physical uplink control channel (PUCCH) is disclosed. The communication device comprises means for enabling a mobile device-specific carrier aggregation with at least one component carrier, means for transmitting the SRS on both a first component carrier and a second component carrier of the at least one component carrier in a first subframe to a network of the wireless communication system, and means for transmitting the PUCCH on the second component carrier of the at least one component carrier in the first subframe to the network of the wireless communication system.

A communication device of a wireless communication system for handling a sounding reference signal (SRS) and a physical uplink control channel (PUCCH) is disclosed. The communication device comprises means for enabling a mobile device-specific carrier aggregation with at least one component carrier, means for transmitting the SRS according to an SRS configuration on both a first component carrier and a second component carrier of the at least one component carrier in a first subframe or a single carrier-frequency division multiple access (SC-FDMA) symbol of the first subframe to a network of the wireless communication system, and means for shortening the PUCCH SC-FDMA symbols comprising at least one acknowledgement result when the PUCCH is transmitted on the second component carrier of the at least one component carrier in the first subframe to the network of the wireless communication system.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a schematic diagram of an exemplary wireless communication system according to the prior art.

FIG. 2 is a schematic diagram of an exemplary wireless communication system according to the present disclosure.

Fig. 3 is a schematic diagram of an exemplary communication device according to the present disclosure.

Fig. 4 is a flowchart of an exemplary process according to the present disclosure.

Fig. 5 is a flowchart of an exemplary process according to the present disclosure.

Fig. 6 is a flowchart of an exemplary process according to the present disclosure.

### Detailed Description

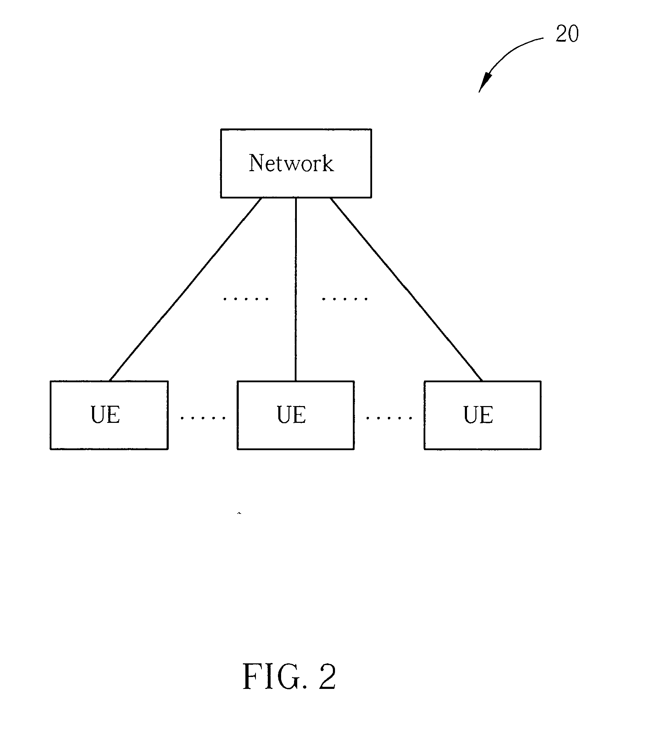

Please refer to Fig. 2, which is a schematic diagram of a wireless communication system 20 according to an example of the present disclosure. The wireless communication system 20, such as a long term evolution-advanced (LTE-A) system or other mobile communication systems supporting a carrier aggregation, is briefly composed of a network and a plurality of user equipments (UEs). In Fig. 2, the network and the UEs are simply utilized for illustrating the structure of the wireless communication system 20. Practically, the network can be referred as to an E-UTRAN (evolved-UTAN) comprising a plurality of evolved Node-Bs (eNBs) and relays in the LTE-A system. The UEs can be mobile devices such as mobile phones, laptops, tablet computers, electronic books, and portable computer systems. Besides, the network and the UE can be seen as a transmitter or receiver according to transmission direction, e.g., for an uplink (UL), the UE is the transmitter and the network is the receiver, and for a downlink (DL), the network is the transmitter and the UE is the receiver.

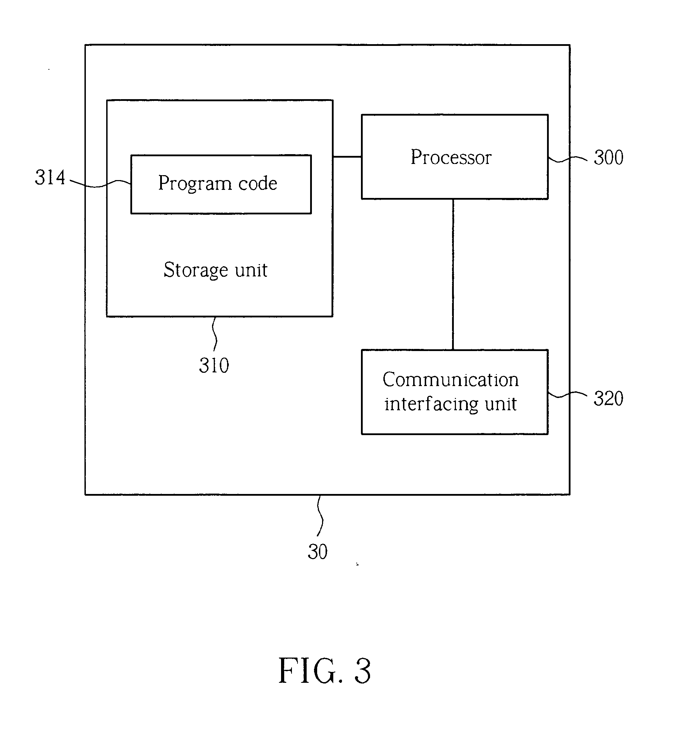

Please refer to Fig. 3, which is a schematic diagram of a communication device 30 according to an example of the present disclosure. The communication device 30 can be the UE or the network shown in Fig. 2, but is not limited herein. The communication device 30 may include a processor 300 such as a microprocessor or Application Specific Integrated Circuit (ASIC), a storage unit 310 and a communication interfacing unit 320. The storage unit 310 may be any data storage device that can store a program code 314, accessed by the processor 300. Examples of the storage unit 310 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 320 is preferably a radio transceiver and can exchange wireless signals with the network according to processing results of the processor 300.

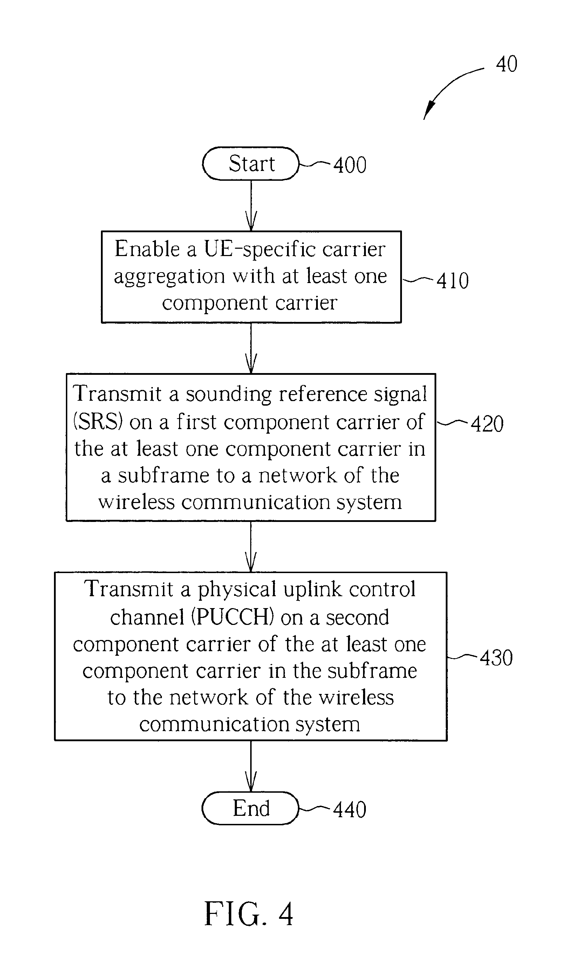

Please refer to Fig. 4, which is a flowchart of a process 40 according to an example of the present disclosure. The process 40 is utilized in a UE of the wireless communication system 20 shown in Fig. 2. The process 40 may be compiled into the program code 314 and includes the following steps:

Step 400: Start.

Step 410: Enable a UE-specific carrier aggregation with at least one component carrier.

Step 420: Transmit a sounding reference signal (SRS) on a first component carrier of the at least one component carrier in a subframe to a network of the wireless communication system.

Step 430: Transmit a physical uplink control channel (PUCCH) on a second component carrier of the at least one component carrier in the subframe to the network of the wireless communication system.

Step 440: End.

The PUCCH carries information comprising at least one of a channel quality indicator (CQI), a scheduling request (SR) and an acknowledgement/negative acknowledgement (ACK/NACK) corresponding to downlink (DL) data for the at least one component carrier. With the UE-specific carrier aggregation configuration for the UE, the UE may transmit the SRS on a first component carrier and the PUCCH on a second component carrier in a subframe to the network according to a command from the network. Alternatively, the UE may take turns for transmitting the SRS and the PUCCH on two component carriers in the subframe according to the command from the network. For example, the UE transmits the SRS and the PUCCH on the first and the second component carriers in a subframe, respectively. In the next subframe, the UE transmits the SRS and the PUCCH on the second and the first component carriers, respectively. The process continues in a way that the UE does not transmit the SRS and the PUCCH in the same component carrier. On the other hand, the network may configure the UE to only transmit the PUCCH on the second component carrier according to a configuration or a predefined rule. The configuration or the predefined rule may be defined by a manufacturer of the UE, a manufacturer of the eNB, a telecom operator or a network signaling. Therefore, the UE can transmit the SRS and the PUCCH on at least one component carrier according to the above illustration and the process 40, when the UE is configured with the UE-specific carrier aggregation.

If the UE is scheduled by the network to transmit the SRS and the PUCCH on the first component carrier in the subframe, the UE may decide to transmit the SRS on the second component carrier according to an SRS configuration, to avoid a collision with the PUCCH. The SRS configuration corresponds to the first component carrier or the second component carrier. It is possible that the second component carrier has been used by the UE to transmit the SRS, or has not been used by the UE to transmit the SRS, according to the SRS configuration corresponding to the second component carrier.

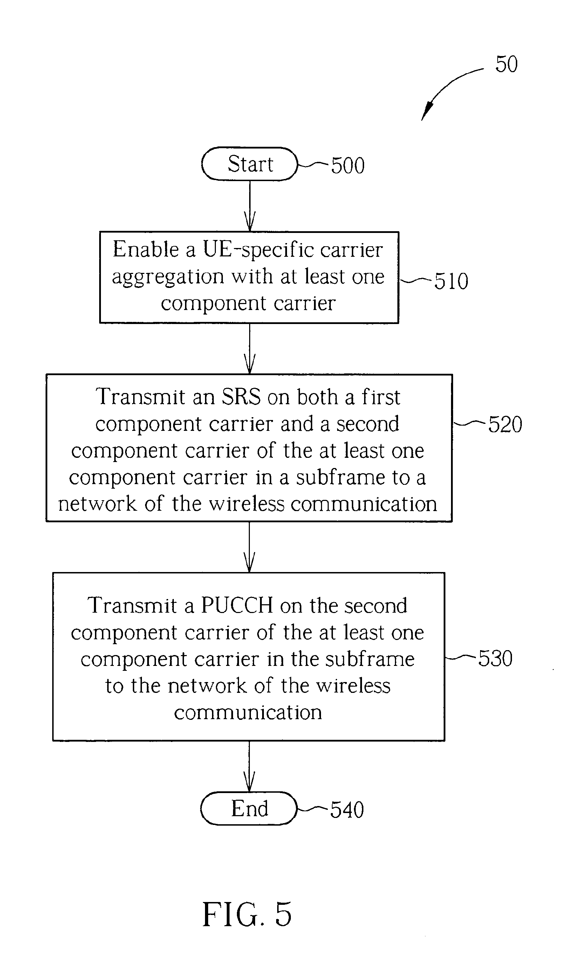

Please refer to Fig. 5, which is a flowchart of a process 50 according to an example of the present disclosure. The process 50 is utilized in a UE of the wireless communication system 20 shown in Fig. 2. The process 50 may be compiled into the program code 314 and includes the following steps:

Step 500: Start.

Step 510: Enable a UE-specific carrier aggregation with at least one component carrier.

Step 520: Transmit an SRS on both a first component carrier and a second component carrier of the at least one component carrier in a subframe to a network of the wireless communication system.

Step 530: Transmit a PUCCH on the second component carrier of the at least one component carrier in the subframe to the network of the wireless communication system.

Step 540: End.

The PUCCH carries information comprising at least one of a channel quality indicator (CQI), a scheduling request (SR) and an acknowledgement/negative acknowledgement (ACK/NACK) corresponding to downlink (DL) data for the at least one component carrier. With the UE-specific carrier aggregation configuration for the UE, the UE transmits the SRS on the first component carrier, and the SRS and the PUCCH on the second component carrier in the subframe according to a command from the network. In this situation, the UE decides to stop transmitting the SRS on the second component carrier according to a certain purpose, for example, to avoid a collision of the SRS and the PUCCH on the second component carrier. On the other hand, the network may configure the UE to only transmit the PUCCH on the second component carrier. Therefore, the UE can transmit the SRS and the PUCCH on at least one component carrier according to the above illustration and the process 50, when the UE is configured with the UE-specific carrier aggregation.

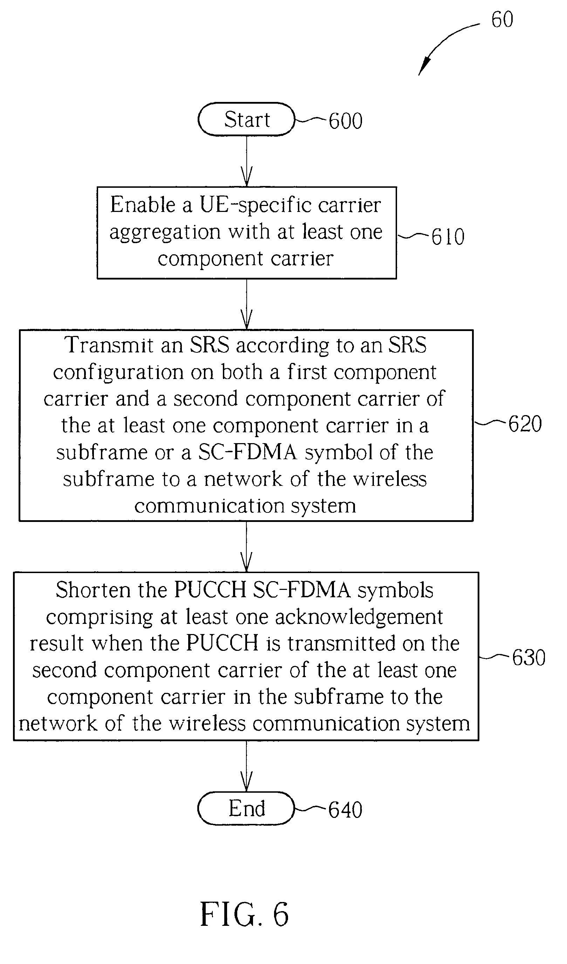

Please refer to Fig. 6, which is a flowchart of a process 60 according to an example of the present disclosure. The process 60 is utilized in a UE of the wireless communication system 20 shown in Fig. 2. The process 60 may be compiled into the program code 314 and includes the following steps:

Step 600: Start.

Step 610: Enable a UE-specific carrier aggregation with at least one component carrier.

Step 620: Transmit an SRS according to an SRS configuration on both a first component carrier and a second component carrier of the at least one component carrier in a subframe or a SC-FDMA symbol of the subframe to a network of the wireless communication system.

Step 630: Shorten the PUCCH SC-FDMA symbols comprising at least one acknowledgement result when the PUCCH is transmitted on the second component carrier of the at least one component carrier in the subframe to the network of the wireless communication system.

Step 640: End.

With the UE-specific carrier aggregation configuration for the UE, if the UE transmits the SRS on the first component carrier, and transmits the SRS and the PUCCH on a second component carrier to the network in the subframe or in a single carrier-frequency division multiple access (SC-FDMA) symbol of the subframe according to an SRS configuration, the UE decides to shorten the PUCCH SC-FDMA symbols comprising at least one acknowledgement result, i.e., a priority of the PUCCH SC-FDMA symbols comprising at least one acknowledgement result is configured to be lower than a priority of the SRS. The UE transmits the SRS on both the first component carrier and the second component carrier in the subframe to the network is for a flexibility of frequency-selective scheduling (e.g. to maintain a certain channel behavior on both component carriers in the same subframe or in the same SC-FDMA symbol). In this situation, the second component carrier may be the only component carrier for the UE to transmit the PUCCH according to a configuration or a predefined rule. The configuration or the predefined rule may be defined by a manufacturer of the UE, a manufacturer of the eNB, a telecom operator or a network signaling. Further, the UE may transmit the SRS on the first component carrier and the second component carrier according to an SRS configuration for the first component carrier and the second component carrier, respectively. Therefore, the UE can transmit the SRS and the PUCCH comprising at least one acknowledgement result on at least one component carrier according to the above illustration and the process 60, when the UE is configured with the UE-specific carrier aggregation.

Please note that, the abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 30.

In conclusion, the exemplary method and means are provided to enhance the transmission of the SRS and the PUCCH for the UE in which the UE can only perform the SRS transmission on a single component carrier, to operate in the wireless communication system (e.g. the LTE-A system) with a plurality of component carriers, i.e., the carrier aggregation.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling a sounding reference signal (SRS) and a physical uplink control channel (PUCCH) for a mobile device in a wireless communication system, the method comprising:
enabling a mobile device-specific carrier aggregation with at least one component carrier;
transmitting the SRS on a first component carrier of the at least one component carrier in a first subframe to a network of the wireless communication system; and
transmitting the PUCCH on a second component carrier of the at least one component carrier in the first subframe to the network of the wireless communication system.

2. The method of claim 1, wherein the PUCCH carries information comprising a channel quality indicator (CQI) or an acknowledgement message, which is an acknowledgement (ACK) or a negative acknowledgement (NACK), for at least one downlink component carrier, and the PUCCH carriers information comprises a scheduling request (SR) for at least one uplink component carrier.

3. The method of claim 1 further comprising:
transmitting the SRS on the first and second component carriers alternatively in a second subframe to the network; and
transmitting the PUCCH on the first and second component carriers alternatively in the second subframe to the network.

4. The method of claim 3 further comprising not transmitting the SRS and the PUCCH on the same component carrier in the second subframe to the network.

5. The method of claim 1 further comprising only transmitting the PUCCH on the second component carrier to the network according to a configuration or a predefined rule.

6. The method of claim 1 further comprising transmitting the SRS on the first component carrier in a third subframe to the network according to a first SRS configuration, when the mobile device happens to transmit the SRS and the PUCCH on the second component carrier in the third subframe to the network according to a second SRS configuration.

7. The method of claim 6, wherein the first SRS configuration corresponds to the first component carrier and the second SRS configuration corresponds to the second component carrier.

8. A method of handling a sounding reference signal (SRS) and a physical uplink control channel (PUCCH) for a mobile device in a wireless communication system, the method comprising:
enabling a mobile device-specific carrier aggregation with at least one component carrier;
transmitting the SRS on both a first component carrier and a second component carrier of the at least one component carrier in a first subframe to a network of the wireless communication system; and
transmitting the PUCCH on the second component carrier of the at least one component carrier in the first subframe to the network of the wireless communication system.

9. The method of claim 8, wherein the PUCCH carries information comprising a channel quality indicator (CQI) or an acknowledgement message, which is an acknowledgement (ACK) or a negative acknowledgement (NACK), for at least one downlink component carrier, and the PUCCH carriers information comprises a scheduling request (SR) for at least one uplink component carrier.

10. The method of claim 8 further comprising transmitting the SRS on the first component carrier and the PUCCH on the second component carrier in a second subframe to the network.

11. The method of claim 8 further comprising only transmitting the PUCCH on the second component carrier to the network according to a configuration or a predefined rule.

12. A method of handling a sounding reference signal (SRS) and a physical uplink control channel (PUCCH) for a mobile device in a wireless communication system, the method comprising:
enabling a mobile device-specific carrier aggregation with at least one component carrier;
transmitting the SRS according to an SRS configuration on both a first component carrier and a second component carrier of the at least one component carrier in a first subframe or a single carrier-frequency division multiple access (SC-FDMA) symbol of the first subframe to a network of the wireless communication system; and
shortening the PUCCH SC-FDMA symbols comprising at least one acknowledgement result when the PUCCH is transmitted on the second component carrier of the at least one component carrier in the first subframe to the network of the wireless communication system.

13. The method of claim 12, wherein transmitting the SRS on both the first component carrier and the second component carrier in the first subframe to the network is for a flexibility of frequency-selective scheduling.

14. The method of claim 13 further comprising only transmitting the PUCCH on the second component carrier to the network according to a configuration or a predefined rule.

15. The method of claim 12 further comprising:
transmitting the SRS on the first component carrier according to the SRS configuration for the first component carrier to the network; and
transmitting the SRS on the second component carrier according to the SRS configuration for the second component carrier to the network.
